# EUROPÄISCHE PATENTANMELDUNG

(11) **EP 0 696 465 A1**
(43) Veröffentlichungstag der Anmeldung: **14.02.1996**
(21) Anmeldenummer: 95112357.9
(22) Anmeldetag: 05.08.1995
(51) Int. Cl.: B01D 3/42, B01D 3/14, B01D 5/00

(54) **Verfahren und Auslaufvorrichtung zum Trennen von Alkohol-Wasser-Mischungen**

(30) Priorität: 09.08.1994 DE 4428080; 02.08.1995 DE 19528389
(71) Anmelder: Wengert, Richard, D-88287 Grünkraut-Gullen (DE); Beck, Wilfried, Dipl.-Ing.(FH), D-88131 Lindau/Bodensee (DE)
(72) Erfinder: Wengert, Richard, D-88287 Grünkraut-Gullen (DE); Beck, Wilfried, Dipl.-Ing.(FH), D-88131 Lindau/Bodensee (DE)
(74) Vertreter: Engelhardt, Guido, Dipl.-Ing.

(57) **Zusammenfassung**

Bei einem Verfahren zum Trennen von Alkohol-Wasser-Mischungen in einzelne Fraktionen mit unterschiedlichen Alkoholanteilen, die in einen mit mindestens drei Ausläufen (4, 5 und 6) versehene Auslaufvorrichtung (1) geleitet werden, wird zunächst ein an die Auslaufvorrichtung (1) angeschlossenes Zeitglied (10) durch das Einfließen der Alkohol-Wasser-Mischung in die Auslaufvorrichtung (1) aktiviert, so dann wird ein erstes im ersten Auslauf (4) eingesetztes Ventil durch Aktivieren des Zeitgliedes (10) geöffnet, danach wird das erste Ventil (4) durch das Zeitglied (10) nach einer einstellbaren Zeiteinheit geschlossen und letztlich wird das Zeitglied (10) nach dem Entleeren der Auslaufvorrichtung (1) auf Betriebsstellung zurückgestellt.

Durch diese Verfahrensweise ist es möglich, Alkohol-Wasser-Mischungen zu trennen, ohne daß Bedienungspersonal dies kontrollieren muß. Des weiteren wird der benötigte Energieaufwand gering gehalten und die Zeiteinheit, die der Auslauf benötigt, um aus der Destilliervorrichtung (2) auszutreten, wird gegenüber der bisherigen Verfahrensweise etwa halbiert.

## Beschreibung

Die Erfindung bezieht sich auf ein Verfahren zum Trennen von Alkohol- Wasser-Mischungen oder dgl. in einzelne Fraktionen mit unterschiedlichen Alkoholanteilen, die in eine mit mindestens drei Ausläufen versehene Auslaufvorrichtung geleitet werden, und eine Auslaufvorrichtung zur Durchführung dieses Verfahrens mit einem Einlauf und mindestens drei Ausläufen, wobei der Einlauf an einem Destillierkreislauf einer Destilliervorrichtung angeschlossen ist, die einen mindestens zwei Brennstufen aufweisenden Brenner und einen Kühlkreislauf umfaßt.

Durch die DE-U 83 13 233.3 ist eine Auslaufvorrichtung zum Trennen von Flüssigkeiten mit unterschiedlichen Alkoholanteilen offenbart. Dort weist die Auslaufvorrichtung zusätzlich eine Rohrleitung auf, die mit drei Ausläufen versehen und mit drei Ventilen absperrbar ist. Die Ausläufe münden hierbei in jeweils ein Gefäß, in dem die einzelnen Fraktionen der Alkohol-Wasser-Mischung gesammelt werden.

Das eingeflossene Volumen der ersten Fraktion - der sogenannte Vorlauf - wird im ersten Gefäß mittels eines Schwimmers gemessen. Mit dem Schwimmer ist eine Stange verbunden, an der zwei verstellbare als Anschläge ausgebildete Muttern montiert sind, die mit einer Rohrwaage korrespondieren.

Steigt nun aufgrund des einfließenden Volumens des Vorlaufes der Schwimmer im ersten Gefäß an, so wird beim Erreichen einer einstellbaren Vorlaufmenge die Rohrwaage auf die andere Seite gekippt.
Die Rohrwaage ist mit einem mit zwei Ausgängen versehenen Ventil verbunden, so daß beim Umschwenken der Rohrwaage der erste Ausgang des Ventils geschlossen und der zweite mit dem zweiten Auslauf verbundene Ausgang des Ventils gleichzeitig geöffnet wird. Dadurch fließt die zweite Fraktion der Alkohol-Wasser-Mischung - der sogenannte Mittellauf - in das zweite Gefäß.
In dem zweiten Gefäß ist eine Meßspindel zur Bestimmung der Alkoholdichte angeordnet, die mit einem Steuerglied verbunden ist, so daß beim Absinken der Alkoholkonzentration in dem dem Mittellauf zugeordneten Gefäß das Ventil dieses Gefäßes durch das Steuerglied geschlossen und das am dritten Auslauf angeordnete Ventil geöffnet wird. Die dritte Fraktion der Alkohol-Wasser-Mischung - der sogenannte Nachlauf - fließt also am Ende des Destillationsprozeßes in das dritte Gefäß.

Derartige Auslaufvorrichtungen benötigen eine Vielzahl von mechanisch sehr empfindlichen Bauteile, um die Zuordnung der jeweiligen Fraktion an den entsprechenden Auslauf zu bewerkstelligen. Diese Bauteile sind zu dem sehr störanfällig, so daß der Alkoholanteil permanent durch Schmecken und durch einen gleichzeitigen Vergleich mit menschlichen Erfahrungswerten kontrolliert werden muß, um ein unerwünschtes Vermischen der einzelnen Fraktionen untereinander zu verhindern.
Um einen neuen Destillationsprozeß zu starten, müssen die Gefäße entleert und die Auslaufvorrichtung wieder neu eingestellt werden, insbesondere müssen der Schwimmer und die Rohrwaage erneut justiert werden.

Des weiteren ist der Energieaufwand zur Betreibung dieser Auslaufvorrichtung sehr hoch, da das Steuerglied während des Destillationsprozeßes ständig mit Strom gespeist werden muß.
Der größte Energieverlust entsteht bei derartigen Auslaufvorrichtungen jedoch im Zeitraum des Nachlaufes, da in dieser Zeiteinheit, die etwa 20 Minuten beträgt, der Brenner unverändert heizt, der Nachlauf aber trotzdem diese Zeiteinheit benötigt, um aus dem Destilliervorrichtung ausgetreten zu sein.
Die aufgewendete Brennerenergie ist also vollständig verloren, da der Nachlauf nicht verwendbar ist, die Zeiteinheit, die der Nachlauf benötigt, um die Destilationsvorrichtung zu verlassen, hängt jedoch von der Leistung des Brenners und der Geschwindigkeit der Kondensierung ab.

Aufgabe der Erfindung ist es nunmehr, ein Verfahren zum Trennen von Alkohol-Wasser-Mischungen oder dgl. der eingangs genannten Art zu schaffen, das selbständig ablaufen kann, ohne daß das Bedienungspersonal die Alkohol-Wasser-Mischung durch Schmecken oder auf andere Art kontrollieren muß. Des weiteren soll die zur Verfahrensdurchführung benötigte Energie gering gehalten werden, auch soll die Zeiteinheit, die der Nachlauf benötigt, um aus der Destilliervorrichtung auszutreten, gegenüber der bisherigen Verfahrensweise etwa halbiert werden.
Auch ist es Aufgabe der Erfindung, eine Auslaufvorrichtung zur Durchführung dieses Verfahrens zu schaffen, die aus einfachen mechanischen Bauteilen aufgebaut ist, so daß der Trennprozeß in die jeweilige Fraktion nur einen geringen Energieaufwand erfordert, aber trotzdem eine optimale Trennung in einzelne Fraktionen gewährleistet ist.

Gemäß der Erfindung wird dies durch die folgenden Verfahrensschritte erreicht:
- Aktivieren eines an die Auslaufvorrichtung angeschlossenen Zeitgliedes durch das Einfließen der Alkohol-Wasser-Mischung in die Auslaufvorrichtung,
- Öffnen eines ersten in dem ersten Auslauf eingesetzten Ventils durch das Aktivieren des Zeitgliedes,
- Schließen des ersten Ventils durch das Zeitglied nach einer einstellbaren Zeiteinheit sowie
- Rückstellen des Zeitgliedes auf Betriebsstellung nach dem Entleeren der Auslaufvorrichtung
Nach einer andersartigen Verfahrensweise sind zur Lösung dieser Aufgabe auch folgende Verfahrensschritte möglich:
- Messen der Temperatur der Alkohol-Wasser-Mischung in einem Destillationskreislauf und/oder Messen der Temperatur des Kühlwassers in einem Kühlkreislauf der Destilliervorrichtung mittels eines oder mehrere Sensoren,
- Übermitteln der gemessenen Temperaturwerte an einen Temperaturregler,
- Öffnen eines zweiten in den dritten Auslauf der Auslaufvorrichtung eingesetzten Ventils in Abhängigkeit von den von Sensoren übermittelten Temperaturwerten.

Besonders vorteilhaft ist es, wenn die letztgenannten Verfahrensschritte nach den erstgenannten Verfahrensschritten erfolgen, und wenn zwischen dem durch das Zeitglied beeinflußten Verfahrensablauf und dem durch die Sensoren beeinflußten Verfahrensablauf die Alkohol-Wasser-Mischung dem zweiten an die Auslaufvorrichtung angeschlossenen Auslauf entnommen wird.

Zur Durchführung der erfindungsgemäßen Verfahren und zur Lösung der Vorrichtungsaufgabe ist die Auslaufvorrichtung derart auszubilden, daß in dieser ein Schwimmschalter oder Drucksensor angeordnet ist, der mit einem Zeitglied verbunden ist, und daß das Zeitglied mit einem ersten Ventil, das dem ersten Auslauf der Auslaufvorrichtung zugeordnet ist, verbunden ist.

Auch ist es angebracht, wenn in dem Destillations- und/oder Kühlkreislauf mindestens ein Temperatursensor angeordnet ist, wenn der Temperatursensor mit einem Temperaturregler verbunden ist, und wenn der Temperaturregler mit einem zweiten dem dritten Auslauf zugeordneten Ventil korrespondiert.

Die Auslaufvorrichtung ist zweckmäßigerweise derart auszubilden, daß der zweite Auslauf als Überlauf ausgebildet und zwischen dem Einlauf und dem ersten Auslauf angeordnet ist, daß der dritte Auslauf am tiefsten Punkt der Auslaufvorrichtung vorgesehen ist, und daß der erste Auslauf auf gleicher Höhe oder etwas oberhalb des dritten Auslaufes angeordnet ist.

Die Verringerung der benötigten Brennerenergie, insbesondere während der Nachlauf die Destillationsvorrichtung verläßt, wird vorteilhafterweise dadurch erzielt, daß die Destilliervorrichtung mit einem zweistufigen Brenner ausgerüstet wird, der während der Nachlaufzeit auf maximale Heizleistung durch den Temperaturregler gefahren und gleichzeitig der Durchfluß des Kühlkreislaufes erhöht wird, in dem ebenfalls durch den Temperaturregler ein Regelglied vollständig geöffnet wird. Daher kondensiert der Nachlauf in der Destilliervorrichtung wesentlich schneller als bisher, so daß eine Einsparung von ca. 10 Minuten erzielt wird. Dies führt zu einer Reduzierung der Brennerenergie, da der für die höhere Brennstufe notwendige Energiebedarf durch die Halbierung der Nachlaufzeit mehr als kompensiert wird.

Die konstruktive Gestaltung der Auslaufvorrichtung erlaubt das Weglassen des Ventils am Mittellauf, da der Auslauf des Mittellaufes als Überlauf ausgebildet ist, so daß bei geschlossenen energetisch tiefergelegenen Ventilen nur dort die Alkohol-Wasser-Mischung austritt. Sobald ein energetisch tiefer gelegenes Ventil offen ist, fließt die Alkohol-Wasser-Mischung an dem entsprechenden Auslauf aus.
Der Energiebdarf ist also mit einer derartigen Steuerung und Anordnung sehr gering, da nur bei geöffnetem Ventil Energie benötigt wird, ansonsten - gerade bei der langen Auslaufzeit des Mittellaufes - jedoch überhaupt keine Energie notwendig ist.

Die Auslaufvorrichtung ist an jede bestehende Destilliervorrichtung anschließbar, so daß diese nachrüstbar sind. Die entsprechenden Sensoren im Kühl- und/ oder Destillierkreislauf können leicht angebracht werden.
Die verwendeten Zeitgeber und Temperaturregler sind einfache mechanische Bauteile, die den Trennprozeß zuverlässig steuern.

Weitere vorteilhatte Ausführungsformen der Erfindung ergeben sich aus den Unteransprüchen.

Eine Ausführungsform der Erfindung ist an Hand einer Zeichnung näher erläutert. Im einzelnen zeigen:
- Figur 1: einen schematischen Aufbau einer Auslaufvorrichtung mit einem Einlauf, drei Ausläufen, denen zwei Ventile zugeordnet sind, einem Zeitglied und einem Temperaturregler sowie deren Verbindung miteinander,
- Figur 2: eine Destilliervorrichtung mit einem Kühlkreislauf und einem Alkohol-Wasser-Mischungs-Kreislauf, an denen Sensoren angeordnet sind, sowie den Anschluß der Auslaufvorrichtung an den Alkohol-Wasser-Mischungs-Kreislauf,
- Figur 3: eine Draufsicht auf die Auslaufvorrichtung nach Figur 1 und
- Figur 4: einen Schnitt IV-IV durch die Auslaufvorrichtung nach Figur 3.

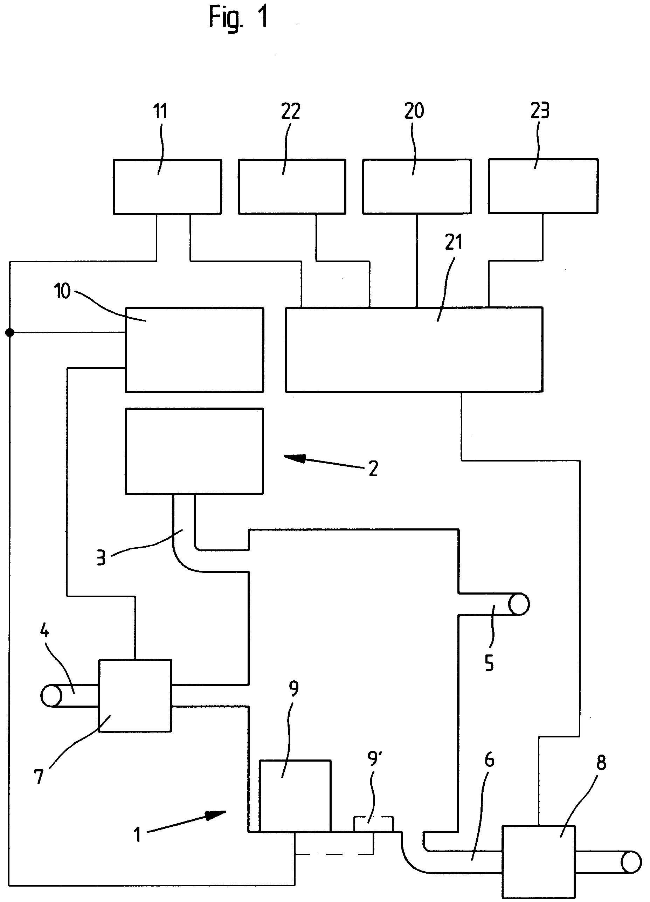

In Figur 1 ist eine Auslauffvorrichtung 1 dargestellt, die an eine Destilliervorrichtung 2 über einen an der Auslaufvorrichtung 1 angebrachten Einlauf 3 anschließbar ist. Die Auslaufvorrichtung 1 weist ferner drei Ausläufe 4, 5 und 6 auf, aus denen die destillierte Alkohol-Wasser-Mischung ausfließt.
An den Ausläufen 4 und 6 sind Ventile 7 und 8 angeordnet, durch die die Ausläufe 4 bzw. 6 absperrbar sind.
Der Auslaufvorrichtung 1 ist des weiteren ein Schwimmschalter 9 oder ein strichpunktiert eingezeichneter Drucksensor 9' zugeordnet, die mit einem Zeitglied 10 verbunden sind und bei kleinsten Mengen von einfließender Alkohol-Wasser-Mischungen in die Auslaufvorrichtung 1 das Zeitglied 10 aktivieren.
Dies öffnet dann sofort das am ersten Auslauf 4 angebrachte Ventil 7, so daß die Alkohol-Wasser-Mischung aus dem Auslauf 4 die Auslaufvorrichtung 1 verläßt.. Die am ersten Auslauf 4 austretende Fraktion der Alkohl-Wasser-Mischung ist der sogenannte Vorlauf des Destillierprozeßes.
Das Zeitglied 10 wird vor dem Destillierbeginn mit einer bestimmten Zeiteinheit eingestellt, so daß nach Ablauf dieser Zeiteinheit das Ventil 4 durch das Zeitglied 10 wieder geschlossen wird.

Der zweite Auslauf 5 ist als Überlauf ausgebildet und zwischen dem Einlauf 3 und dem ersten Auslauf 4 angeordnet, so daß die Alkohol-Wasser-Mischung in der Auslaufvorrichtung 1 zunächst nach dem Schließen des ersten Auslaufes 4 ansteigt bis zum zweiten Auslauf 5, durch den dann die Alkohol-Wasser-Mischung austritt.

Die Fraktion der Alkohol-Wasser-Mischung , die die Auslaufvorrichtung 1 am zweiten Auslauf 5 verläßt, entspricht dem Mittellauf.
Zur Destillierung des Mittellaufes werden in etwa eine bis anderthalb Stunden benötigt. In dieser Zeit ist zum Betrieb der Auslaufvorrichtung 1 keine Energie erforderlich, da in diesem Betriebszustand keine Bauteile Energie brauchen.

Der Schwimmschalter 9 ist in diesem Betriebszustand an seinem energetisch höchsten Punkt gehalten durch die in der Auslaufvorrichtung 1 befindliche Fraktion des Mittellaufes.

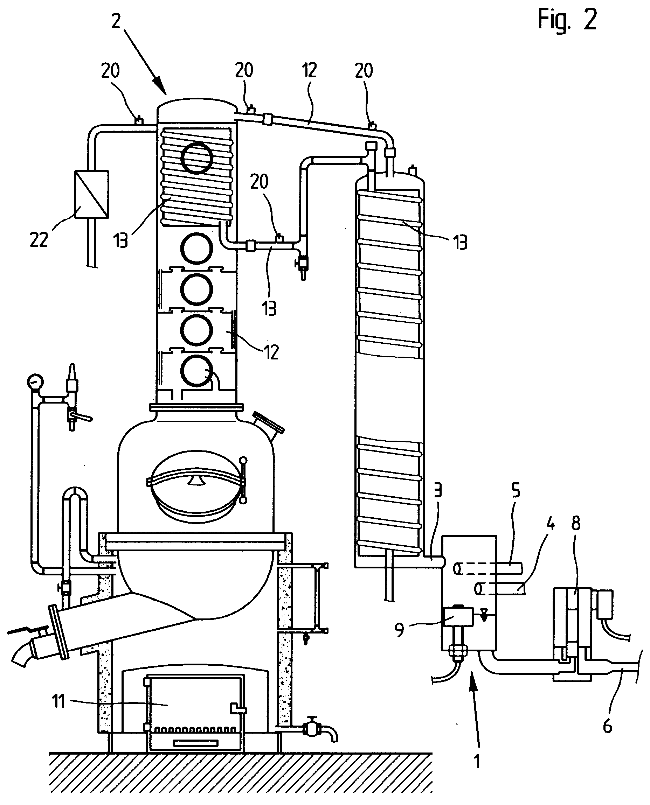

Figur 2 zeigt die Destilliervorrichtung 2 mit einem zweistufigen Brenner 11, mit einem Destillationskreislauf 12 und mit einem nur teilweise dargestellten Kühlkreislauf 13. Die in Figur 1 dargestellte Auslaufvorrichtung 1 ist am Ende des Destillationskreislaufes 12 angeschlossen.
In dem Destillationskreislauf 12 und/ oder dem Kühlkreislauf 13 sind wahlweise mehrere Sensoren 20 angeordnet, die die jeweilige Temperatur der Kreisläufe 12 und 13 messen und die gemessenen Werte an einen - in Figur 1 dargestellten - Temperaturregler 21 übermitteln.
Der Temperaturregler 21 ist mit dem am dritten Auslauf 6 angeordneten Ventil 8 verbunden, das durch den Temperaturregler 21 dann geöffnet wird, wenn die Temperatur im Destillationskreislauf 12 und/ oder im Kühlkreislauf 13 einen eingestellten Wert übersteigt.
Sobald nämlich der Alkoholanteil in der Alkohol-Wasser-Mischung abfällt, steigt die Temperatur der Alkohol-Wasser-Mischung und damit auch die Temperatur im Kühlkreislauf 13 bei gleichbleibender Brennereinstellung.

Ist das am dritten Auslauf 6 angebrachte Ventil 8 geöffnet, so fließt die Alkohol-Wasser-Mischung aus dem dritten Auslauf 6 heraus, da der dritte Auslauf 6 an der energetisch niedrigsten Stelle der Auslaufvorrichtung 1 angeordnet ist.
Der Schwimmschalter 9 sinkt ebenfalls bzw. die Wassersäule auf dem Drucksensor 9' nimmt ab.
Der Temperaturregler 21 ist auch mit dem zweistufigen Brenner 11 verbunden, genauso wie das Zeitglied 10. Während der Mittelauf destilliert wird, ist es notwendig, daß der Brenner 11 eine sehr konstante Wärmemenge an die Destilliervorrichtung 2 abgibt, damit die Alkoholkonzentration der Alkohol-Wasser-Mischung konstant bleibt. Erst wenn der Alkohol des Ausgangsstoffes fast vollständig destilliert ist - also der sogenannte Nachlauf beginnt - muß der Destillationskreislauf 12 vollständig von diesem gereinigt werden.
Dies sollte schnell geschehen, um Energie zu sparen und um baldmöglichst mit einem neuen Destillationsprozeß beginnen zu können.
Dies ist dadurch gewährleistet, daß der Temperaturregler 21 zu Beginn des Nachlaufes den Brenner 11 auf die maximale Heizstufe stellt, so daß der Nachlauf schnell erzeugt wird.
Nun muß der gasförmige Nachlauf im Destillationskreislauf 12 durch Abkühlung schnell in den flüssigen Aggregatszustand überführt werden.
Dies geschieht dadurch, daß der Temperaturregler 21 mit einem - in Figur 1 und 2 dargestellten - Regelglied 22 verbunden ist, das im Kühlkreilslauf 13 angeordnet ist.
Der Temperaturregler 21 öffnet das Regelglied 22, während der Nachlauf vollständig kondensiert, so daß der Durchfluß des Kühlmittels erhöht wird und die Kondensation der gasförmigen Alkohol-Wasser-Mischung schneller erfolgt als mit normalem Kühlmitteldurchsatz.
Wenn der Nachlauf beendet und der Destillationskreislauf 12 vollständig entleert ist, schließt der Temperaturregler 21 das am dritten Auslauf 6 angeordnete Ventil 8 wieder. Die in der Auslaufvorrichtung 1 befindliche Alkohol-Wasser-Mischung ist bereits vollständig ausgeflossen, so daß der Schwimmschalter 9 auf den Boden der Auslaufvorrichtung 1 absinkt. Dadurch wird dem Zeitglied 10 mitgeteilt, daß der Destillationsprozeß beendet ist, so daß bei einem erneuten Ansteigen des Schwimmschalters 9 das Zeitglied 10 wieder aktiviert werden kann.
Nach dem gleichen Prinzip arbeitet der strichpunktiert eingezeichnete Drucksensor 9', der bereits auf eine sehr geringe Wassersäule anspricht.
Gleichzeitig wird der Brenner 11 auf eine niedrigere Leistung gestellt, und zwar entweder durch den Temperaturregler 21 oder durch das erneute Aktivieren des Zeitgliedes 10.

Der Temperaturregler 21 ist auch mit einem akustischen und/ oder optischen Signalgeber 23 verbunden, der dem Bedienungspersonal anzeigt, wann die Temperatur des Nachlaufes erreicht und wann der Destillationsprozeß abgeschlossen ist.

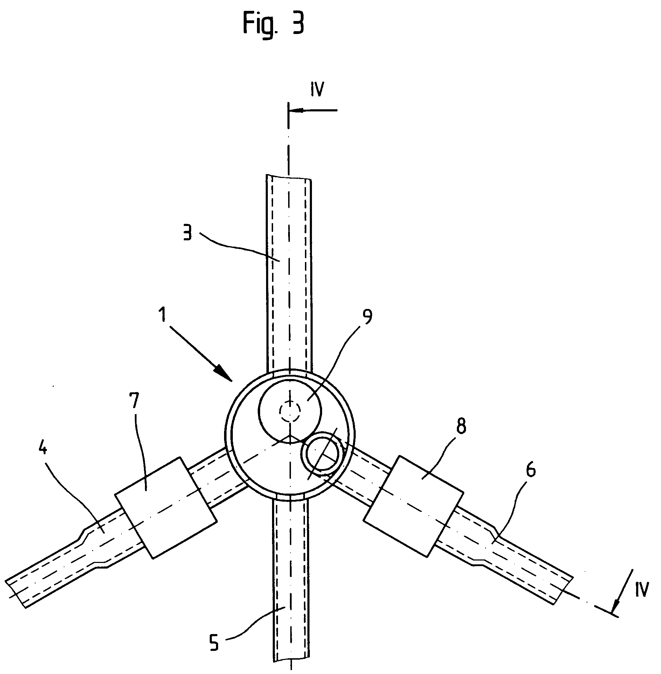

In Figur 3 ist die Lage des Einlaufes 3 sowie der Ausläufe 4, 5 und 6 zueinander dargestellt. Es ist möglich, auch mehrere Ausläufe an der Auslaufvorrichtung 1 vorzusehen, insbesondere ausgestaltet als Auslauf 5.
Dies können dann auch über Ventile absperrbar sein, die entweder über Zeitglieder und/ oder Temperaturregler absperrbar sind.

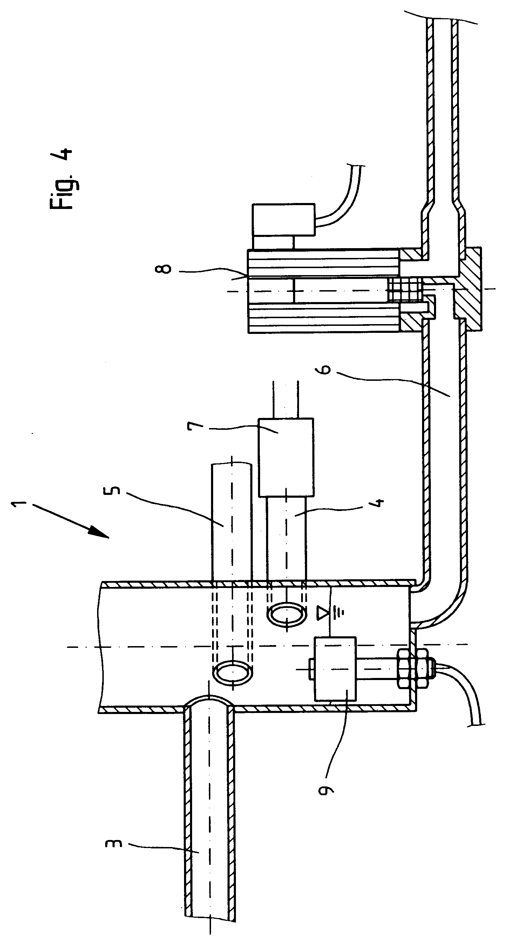

Figur 4 zeigt die Auslaufvorrichtung 1 mit einer geringen Menge von Alkohol-Wasser-Mischung, so daß der Schwimmschalter 9 leicht angehoben ist.
Das Ventil 8 am dritten Auslauf 6 ist ebenfalls dargestellt und arbeitet als herkömmliches Magnetventil, ebenso wie das Ventil 7 am ersten Auslauf 4.

## Patentansprüche

1. Verfahren zum Trennen von Alkohol-Wasser-Mischungen oder dgl. in einzelne Fraktionen mit unterschiedlichen Alkoholanteilen, die in eine mit mindestens drei Ausläufen versehene Auslaufvorrichtung geleitet werden,
**gekennzeichnet**
durch die aufeinander folgenden Verfahrensschritte:
- Aktivieren eines an die Auslaufvorrichtung (1) angeschlossenen Zeitgliedes (10) durch das Einfließen der Alkohol-Wasser-Mischung in die Auslaufvorrichtung (1),
- Öffnen eines ersten in dem ersten Auslauf (4) eingesetzten Ventils (7) durch das Aktivieren des Zeitgliedes (10),
- Schließen des ersten Ventils (4) durch das Zeitglied (10) nach einer einstellbaren Zeiteinheit sowie
- Rückstellen des Zeitgliedes (10) auf Betriebsstellung nach dem Entleeren der Auslaufvorrichtung (1).

2. Verfahren zum Trennen von Alkohol-Wasser-Mischungen oder dgl. in einzelne Fraktionen mit unterschiedlichen Alkoholanteilen, die in eine mit mindestens drei Ausläufen versehene Auslaufvorrichtung geleitet werden,
**gekennzeichnet**
durch die aufeinander folgenden Verfahrensschritte:
- Messen der Temperatur der Alkohol-Wasser-Mischung in einem Destillationskreislauf (12) und/oder Messen der Temperatur des Kühlwassers in einem Kühlkreislauf (13) der Destilliervorrichtung (2) mittels eines oder mehrere Sensoren (20),
- Übermitteln der gemessenen Temperaturwerte an einen Temperaturregler (21),
- Öffnen eines zweiten in den dritten Auslauf (6) der Auslaufvorrichtung (1) eingesetzten Ventils (8) in Abhängigkeit von den von Sensoren (20) übermittelten Temperaturwerten.

3. Verfahren nach den Ansprüchen 1 und 2,
**dadurch gekennzeichnet**,
daß die Verfahrensschritte nach Anspruch 2 nach den Verfahrensschritte nach Anspruch 1 erfolgen, und daß zwischen dem durch das Zeitglied (10) gemäß Anspruch 1 beeinflußten Verfahrensablauf und dem durch die Sensoren (20) beeinflußten Verfahrensablauf gemäß Anspruch 2 die Alkohol-Wasser-Mischung dem zweiten an die Auslaufvorrichtung (1) angeschlossenen Auslauf (5) entnommen wird.

4. Verfahren nach Anspruch 3,
**dadurch gekennzeichnet**,
daß ein mit mindestens zwei Brennstufen ausgerüsteter Brenner (11) in Abhängigkeit der jeweiligen Ventilstellungen mittels dem Zeitglied (10) und/ oder dem Temperaturregler (21) gesteuert wird.

5. Verfahren nach Anspruch 3,
**dadurch gekennzeichnet,**
daß ein im Kühlkreislauf (12) der Destilliervorrichtung (2) angeordnetes Regelglied (22) nach dem Öffnen des zweiten Ventils (8) geöffnet wird, und daß das Regelglied (22) nach dem Entleeren der Auslaufvorrichtung (1) teilweise geschlossen wird.

6. Auslaufvorrichtung zum Trennen von Alkohol-Wasser-Mischungen oder dgl. in einzelne unterschiedliche Alkoholanteile aufweisende Fraktionen mit einem Einlauf und mindestens drei Ausläufen, wobei der Einlauf an einem Destillierkreislauf einer Destilliervorrichtung angeschlossen ist, die einen mindestens zwei Brennstufen aufweisenden Brenner und einen Kühlkreislauf umfaßt,
**dadurch gekennzeichnet**,
daß in der Auslaufvorrichtung (1) ein Schwimmschalter (9) oder ein Drucksensor (9') angeordnet ist, der mit einem Zeitglied (10) verbunden ist, und daß das Zeitglied mit einem ersten Ventil (7), das dem ersten Auslauf (4) der Auslaufvorrichtung (1) zugeordnet ist, verbunden ist.

7. Auslaufvorrichtung zum Trennen von Alkohol-Wasser-Mischungen oder dgl. in einzelne unterschiedliche Alkoholanteile aufweisende Fraktionen mit einem Einlauf und mindestens drei Ausläufen, wobei der Einlauf an einem Destillierkreislauf einer Destilliervorrichtung angeschlossen ist, die einen mindestens zwei Brennstufen aufweisenden Brenner und einen Kühlkreislauf umfaßt,
**dadurch gekennzeichnet**,
daß in dem Destillationskreislauf (12) und/oder dem Kühlkreislauf (13) mindestens ein Sensor (20) angeordnet ist, daß der Sensor (20) mit einem Temperaturregler (21) verbunden ist, und daß der Temperaturregler (21) mit einem zweiten dem dritten Auslauf (6) zugeordneten Ventil (8) korrespondiert.

8. Auslaufvorrichtung nach Anspruch 5 und 6,
**dadurch gekennzeichnet,**
daß der zweite Auslauf (5) als Überlauf ausgebildet ist und zwischen dem Einlauf (3) und dem ersten Auslauf (4) angeordnet ist, daß der dritte Auslauf (6) am tiefsten Punkt der Auslaufvorrichtung (1) vorgesehen ist, und daß der erste Auslauf (4) auf gleicher Höhe oder etwas oberhalb des dritten Auslaufes (6) angeordnet ist.

9. Auslaufvorrichtung nach Anspruch 8,
**dadurch gekennzeichnet,**
daß das Zeitglied (10) und/ oder der Temperaturregler (21) mit dem Brenner (11) verbunden sind.

10. Auslaufvorrichtung nach Anspruch 8,
**dadurch gekennzeichnet**,
daß dem Zeitglied (10) und/ oder dem Temperaturregler (21) ein akustischer und/oder optischer Signalgeber (23) zugeordnet ist.

11. Auslaufvorrichtung nach Anspruch 8,
**dadurch gekennzeichnet**,
daß dem Kühlkreislaufes (12) ein Regelglied (22) zugeordnet ist, das die Durchflußmenge des Kühlkreislaufes (13) steuert und das mit dem Temperaturregler (21) verbunden ist.

12. Auslaufvorrichtung nach Anspruch 11,
**dadurch gekennzeichnet**,
daß dem Regelglied (22) eine Temperaturanzeige zugeordnet ist.
